Europäisches Patentamt

(19) European Patent Office

Office européen des brevets

(11) Veröffentlichungsnummer: **0 031 475**
**A1**

(12) # EUROPÄISCHE PATENTANMELDUNG -

(21) Anmeldenummer: **80107534.2**

(51) Int. Cl.³: **G 02 F 1/133**, H 05 B 3/14

(22) Anmeldetag: **02.12.80**

(30) Priorität: **07.12.79 DE 2949329**

(43) Veröffentlichungstag der Anmeldung: **08.07.81**
**Patentblatt 81/27**

(84) Benannte Vertragsstaaten: **FR GB IT**

(71) Anmelder: **SIEMENS AKTIENGESELLSCHAFT Berlin**
**und München, Postfach 22 02 61,**
**D-8000 München 22 (DE)**

(72) Erfinder: **Feldtkeller, Martin, Michaeliburgstrasse 15,**
**D-8000 München 80 (DE)**
Erfinder: **Tauer, Karl, M., Dipl.-Ing.,**
**Hohenwaldeckstrasse 20, D-8000 München 90 (DE)**

(54) **Heizbare Flüssigkristallzelle.**

(57) Vorgeschlagen wird ein Thermostat mit einem Heiztransistor (14, 16), der sich auf einer wärmeleitenden Platte befindet und durch einen zwischen Kollektor und Basis liegenden Kaltleiter (17) geregelt wird. In einer bevorzugten Ausführung sind mehrere, durch Emitter-Widerstände (21, 22) entkoppelte Transistoren (14, 16) im Kreis einer Gleichspannungsquelle parallelgeschaltet.

Ein solches Flüssigkristalldisplay wird vor allem dort verwendet, wo man mit starkem Frost rechnen muß, also etwa in Zapfsäulen von Tankstellen.

EP 0 031 475 A1

0031475

SIEMENS AKTIENGESELLSCHAFT      Unser Zeichen
Berlin und München              VPA 79 P 1 1 9 1 EUR

**Heizbare Flüssigkristallzelle**

Die Erfindung bezieht sich auf eine Flüssigkristallzelle gemäß dem Oberbegriff des Anspruchs 1. Eine
derartige Anzeige wird in "Electronics" v. 07.07.77,
S. 96 bis 103, insb. S. 99f, beschrieben.

Flüssigkristalline Substanzen werden mit fallender
Temperatur immer träger und gehen unterhalb eines
kritischen Temperaturwertes in den festen Zustand
über. Deshalb müssen Flüssigkristalldisplays, die
auch in einer relativ kalten Umgebung anzeigen sollen,
mit einem Heizer ausgestattet werden. Hierzu verwendet man heutzutage in der Regel eine sog. "Heizfolie", die aus zwei Leiterbahnstrukturen auf einer
Kaptonunterlage besteht. Die Heizleistung der Folie
wird elektronisch über einen Operationsverstärker
gesteuert, wobei die beiden Widerstandsstrukturen
als Temperaturfühler bzw. als Wärmequelle dienen.

Les 1 Ode /07.12.79

Ein solcher Thermostat gibt seine Wärme auf großer Fläche gleichmäßig ab und arbeitet überdies recht genau; er verlangt allerdings einen gewissen Schaltungsaufwand, bringt wegen der kritischen Übergänge Folie/Draht Kontaktierungsprobleme mit sich und läßt sich nicht ohne weiteres an unterschiedliche Displayformate anpassen.

Der Erfindung liegt daher die Aufgabe zugrunde, eine Flüssigkristallanzeige mit einem Heizelement zu entwickeln, das ebenfalls lokale Überhitzungen vermeidet und auch über eine ausreichende Regelgenauigkeit verfügt, dabei aber mit einfachen Mitteln gesteuert und leicht angeschlossen werden kann. Diese Aufgabe wird erfindungsgemäß durch eine Flüssigkristallzelle mit den Merkmalen des Patentanspruchs 1 gelöst.

Das vorgeschlagene Display wird durch die Verlustwärme eines Transistors aufgeheizt, dessen Leistung durch den temperaturabhängigen Widerstand eines Kaltleiters reguliert wird und von dessen Wärme der größte Teil über die Wärmeverteilerplatte in die Flüssigkristallschicht gelangt. Die Transistoren lassen sich mühelos kontaktieren und auch die Anpassung an unterschiedlich bemessene Displays bereitet keinerlei Schwierigkeiten, da man lediglich die Platte und ggf. die Transistorleistung verändern muß. Daß ein Heiztransistor ein gewisses Volumen beansprucht, wirkt sich in der Praxis nicht störend aus, da heizbare Flüssigkristallanzeigen in aller Regel nach hinten durch eine wärmedämmende (Kunststoff-)Schicht abzuschließen sind; diese Masse könnte den Transistor ohne weiteres aufnehmen.

Wenn es die Umstände erfordern, kann man auf die
Wärmeverteilerplatte auch mehrere Heiztransistoren
montieren, die dann parallelzuschalten und über
Emitterwiderstände voneinander zu entkoppeln sind.

Die Wärmeverteilerplatte selbst besteht normalerweise
aus einem gut wärmeleitenden Metall wie Kupfer oder
Aluminium. Es kommen aber auch andere Materialien
mit ähnlichem Wärmeleitvermögen infrage, etwa bestimmte Keramiken auf Berylliumbasis.

Weitere vorteilhafte Ausgestaltungen und Weiterbildungen
der Erfindung sind Gegenstand zusätzlicher Ansprüche.

Der Lösungsvorschlag soll nun anhand eines bevorzugten
Ausführungsbeispiels in Verbindung mit der beigefügten
Zeichnung näher erläutert werden. In den Figuren sind
einander entsprechende Teile mit gleichen Bezugszeichen
versehen. Es zeigen:
Fig. 1 eine erfindungsgemäße Flüssigkristallanzeige
        in einem Seitenschnitt;
Fig. 2 das Display der Fig. 1 in einer Draufsicht
        und
Fig. 3 ein Schaltbild für den Thermostaten der dargestellten Anzeige.

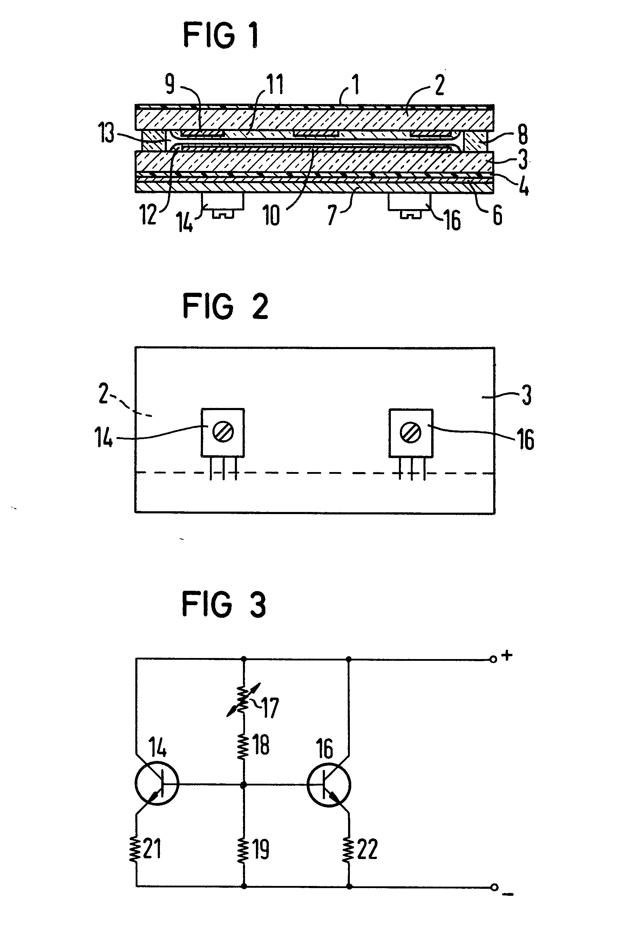

Die Flüssigkristallanzeige der Figuren 1 und 2 enthält
im einzelnen einen vorderen Linearpolarisator 1, eine
vordere Trägerplatte (Vorderplatte) 2, eine hintere
Trägerplatte (Rückplatte) 3, einen hinteren Linearpolarisator 4, einen Reflektor 6 und eine Wärmeverteilerplatte 7. Die beiden Trägerplatten werden durch
einen Rahmen 8 in einem bestimmten Abstand dicht miteinander verbunden. Sie tragen auf ihren einander zugewandten Flächen leitfähige Beläge (Vorderelektrode, bestehend aus mehreren getrennt ansteuerbaren Segmentelektroden 9, und durchgehende Rückelektrode 10) und darüber jeweils eine Orientierungsschicht 11,12. Die Rückplatte ragt an einer Seite über die Vorderplatte hinaus; auf der überstehenden Randzone befindet sich die (nicht dargestellte) Kontaktleiste der Anzeige. Die durch den Rahmen und die beiden Platten gebildete Kammer ist mit einer Flüssigkristallschicht 13 gefüllt. Auf die Außenseite der Wärmeverteilerplatte sind zwei Heiztransistoren 14,16 geschraubt, und zwar derart, daß die Transistorgehäuse der Verteilerplatte fest anliegen und die Transistoranschlüsse zur Kontaktleiste weisen. Die Flüssigkristallanzeige arbeitet im vorliegenden Fall nach dem Prinzip der sog. "Drehzelle" , deren Wirkungsweise in der DE-AS 21 58 563 im einzelnen geschildert wird.

Aus Fig. 3 geht hervor, daß die beiden Transistoren 14,16 im Kreis einer Gleichspannungsquelle nebeneinanderliegen. Parallel zu den Kollektor-Emitter-Strecken der Transistoren 14,16 liegt eine Widerstandskette, bestehend aus einem Kaltleiter 17 sowie zwei temperaturstabilen Impedanzen 18,19. Die Transistor-Basen kontaktieren die Widerstandskette zwischen den beiden Festwiderständen, so daß die Widerstände 17 und 18 im Kollektor-Basis-Kreis und der Widerstand 19 im Emitter-Basis-Kreis der beiden Transistoren 14,16 liegen. Den Emittern ist zusätzlich jeweils ein weiterer Widerstand 21,22 nachgeschaltet. Diese Emitterwiderstände entkoppeln die beiden Transistoren, so daß eine gleichmäßige Stromverteilung gewährleistet ist, und dienen zudem als Strombegrenzer für den Fall sehr tiefer Temperaturen.

Die Schaltungselemente sind im vorliegenden Beispiel folgendermaßen dimensioniert: Die Gleichspannungsquelle liefert 12 V, der Kaltleiter hat bei $10°$ C einen Widerstand von 3 k$\Omega$, die beiden Impedanzen 18 und 19 sind 680 $\Omega$ groß und die beiden Emitterwiderstände haben jeweils einen Wert von 2,2 $\Omega$. Die Transistoren erbringen eine Verlustleistung von jeweils 10W. Beheizt man mit einem derart ausgelegten Thermostaten eine marktübliche Flüssigkristallanzeige mit Querabmessungen von beispielsweise 2,5 x 5 cm, so sinkt die Displaytemperatur bei Umgebungstemperaturen bis zu -20$^{o}$C nicht unter +10$^{o}$C ab.

Die Erfindung ist nicht auf das dargestellte Ausführungsbeispiel beschränkt. So läßt sich die Heizleistung noch durch zusätzliche Maßnahmen steigern, die die Wärmetransportverluste verringern. Beispielsweise könnte man die Wärmeverteilerplatte direkt als Rückplatte verwenden und unter Umständen sogar auch noch als Reflektor oder/ und als Rückelektrode benutzen.

4 Patentansprüche
3 Figuren

Patentansprüche

1. Flüssigkristallzelle mit zwei zueinander parallelen Trägerplatten (Vorderplatte, Rückplatte), einer Flüssigkristallschicht zwischen den beiden Trägerplatten und einem Heizer hinter der Rückplatte, d a d u r c h g e k e n n z e i c h n e t , daß der Heizer einen Transistor (Heiztransistor 14, 16) enthält, der auf der Rückseite einer wärmeleitenden Platte (Wärmeverteilerplatte 7) angebracht ist und dessen Verlustleistung durch einen zwischen den Kollektor und der Basis des Heiztransistors (14, 16) geschalteten Kaltleiter (17) gesteuert wird.

2. Flüssigkristallzelle nach Anspruch 1, d a d u r c h g e k e n n z e i c h n e t , daß die Wärmeverteilerplatte (7) aus Kupfer, Aluminium oder einer Keramik auf Berylliumbasis besteht.

3. Flüssigkristallzelle nach Anspruch 1 oder 2, d a d u r c h g e k e n n z e i c h n e t , daß die Wärmeverteilerplatte (7) zugleich auch die Rückplatte ist.

4. Flüssigkristallzelle nach einem der Ansprüche 1 bis 3, d a d u r c h g e k e n n z e i c h n e t , daß der Heizer mehrere Heiztransistoren (14, 16) enthält, die im Kreis einer Gleichspannungsquelle zueinander parallel liegen und jeweils mit einem Emitterwiderstand (21, 22) versehen sind.

0031475

1/1

FIG 1

FIG 2

FIG 3

Europäisches
Patentamt

**EUROPÄISCHER RECHERCHENBERICHT**

0031475

Nummer der Anmeldung

EP 80 10 7534

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | **EINSCHLÄGIGE DOKUMENTE** | | |
| | FR - A - 1 535 492 (CORECI)<br>* Seite 1, linke Spalte, letzte Absatz, rechte Spalte, Zeilen 12-21; Seite 2, linke Spalte, letzte Absatz; Figur 2 *<br><br>-- | 1 | G 02 F 1/133<br>H 05 B 3/14 |
| | US - A - 3 330 941 (A. DEL DUCA)<br>* Spalte 1, Zeilen 22-42; Spalte 2, Zeilen 9-62; Spalte 3, Zeilen 12-25; Figur 3 *<br><br>-- | 1 | |
| | FR - A - 1 572 671 (CATERPILLAR)<br>* Seite 2, Zeilen 2-15 *<br><br>-- | 1 | **RECHERCHIERTE SACHGEBIETE (Int. Cl.³)**<br><br>G 02 F 1/13<br>1/133<br>G 05 D 23/24<br>H 05 B 3/14 |
| A | US - A - 4 029 393 (D.F. DUNGAN et al.)<br>* Spalte 2, Zeilen 5-67; Patentanspruch 1; Figur 1 *<br><br>-- | 1,3 | |
| AD | ELECTRONICS, Band 50, Nr. 14, 7 Juli 1977<br>New York US<br>S.E. SCRUPSKI: "Digital-display manufacturers strive to refine their technologies", Seiten 96-103<br>* Seite 99, letzte Absatz; Figur 4; Seite 100, linke Spalte *<br><br>-- | 1 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung |
| A | US - A - 4 093 355 (M. KAPLIT et al.)<br>* Patentanspruch 1; Figuren 1, 2 * ./. | 1 | D: in der Anmeldung angeführtes Dokument<br>L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Den Haag | 19-03-1981 | BORMS |

EPA form 1503.1   06.78

Europäisches
Patentamt

**EUROPÄISCHER RECHERCHENBERICHT**

0 0 3 1 4 7 5

Nummer der Anmeldung

EP 80 10 7534
-2-

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 4 119 842 (D.B. HAYDEN et al.) <br><br> * Spalte 1, Zeilen 19-42; Figuren 2-3 * <br><br> ---- | |

KLASSIFIKATION DER ANMELDUNG (Int.Cl. 3)

RECHERCHIERTE SACHGEBIETE (Int. Cl. 3)